# EUROPEAN PATENT APPLICATION

(11) **EP 1 629 890 A1**
(43) Date of publication of application: **01.03.2006**
(21) Application number: 04726660.6
(22) Date of filing: 08.04.2004
(51) Int. Cl.: B01J 35/02, D06M 11/46, D01F 6/92

(54) **CATALYST-SUPPORTING FIBER STRUCTURE AND METHOD FOR PRODUCING SAME**

(30) Priority: 11.04.2003 JP 2003107453; 22.07.2003 JP 2003277335; 29.08.2003 JP 2003306132; 17.09.2003 JP 2003324286
(71) Applicant: TEIJIN LIMITED, Osaka-shi Osaka 541-0054 (JP)
(72) Inventor: MIYOSHI, Takanori, Iwakuni-shi, Yamaguchi 740-0014 (JP); KOMURA, Shinya, Iwakuni-shi, Yamaguchi 740-0014 (JP); MINEMATSU, Hiroyoshi, Iwakuni-shi, Yamaguchi 740-0014 (JP); NONOKAWA, Ryuji, Iwakuni-shi, Yamaguchi 740-0014 (JP)
(74) Representative: Hallybone, Huw George
(86) International application number: PCT/JP2004/005070
(87) International publication number: WO 2004/091785

(57) **Abstract**

A catalyst-supporting fiber structure having a catalyst supported on a fiber constituting a fiber structure having both thorough flexibility and catalyst supporting performance, wherein the fiber has an average fiber diameter of not more than 1 µm, and a fiber having a fiber length of not more than 20 µm is not substantially contained.

Since the subject fiber structure is excellent in catalyst-supporting characteristic, for example, it is possible to provide a fiber structure having an extremely high ability to degrade harmful chemicals.

## Description

### TECHNICAL FIELD

The present invention relates to a catalyst-supporting fiber structure having a catalyst supported on a fiber constituting a fiber structure and a production process of the same.

### BACKGROUND ART

Because of destruction of the recent global environment, an environmental issue is taken up as a social problem and is getting increasingly popular more and more. Because, the environmental issue becomes intensified, development of high-degree removal technologies of harmful chemical pollutants is demanded. Above all, with respect to VOC (volatile organic chemical) such as benzene and trichloroethylene and endocrine-disrupting chemicals such as phthalic esters, serious influences against the human body entertain misgivings. In particular, with respect to the wastewater containing such chemicals, not only installment of large-scale treatment facilities but also substantially complete removal at individual sources of an outbreak begins to be demanded.

As a method for removing such chemical pollutants, a method for using a microorganism as a catalyst for degrading chemical pollutants in the wastewater is studied, and for example, a method for supporting microorganisms on a knitted fabric of a synthetic fiber to degrade chemical pllutants is proposed (see, for example, Patent Document 1). However, this method involved such a problem that since the amount of supporting the microorganisms is limited, the treatment efficiency is poor.

Furthermore, absorbents, catalysts and the like for removing and degrading harmful chemicals in the wastewater are researched and developed. Above all, titanium oxide having photocatalytic activity is noticed as a catalyst capable of degrading harmful chemicals. That is, by irradiating a photocatalytic titanium oxide with light of a wavelength having energy of a band gap or wider, an electron is generated in a conductive band and a hole is generated in a valence band due to optical pumping. And high reduction power of the electron and oxidation power of the hole, respectively as generated due to the optical pumping, is used for degrading harmful chemicals.

For example, a photocatalytic whisker having photocatalytic titanium oxide supported on a porous whisker having a specified specific surface area is proposed (see, for example, Patent Document 2). However, in order to use a whisker as obtained by this method in the actual wastewater treatment, this whisker must be further contained in a paint material, rubber or the like. Thus, there were encountered problems that the operations are complicated and that the amount of the catalyst to be used is small.

A photocatalytic titania fiber having titanium oxide supported on the surface of a titania fiber having a specified specific surface area or smaller is also proposed (see, for example, Patent Document 3). However, there was also encountered a problem that the amount of the catalyst of the titania fiber of this method is small. Also, there was encountered a problem that since the titania fiber is poor in flexibility, the form to be used is limited.

As an example of using a flexible support, supporting a photocatalyst on a fabric or non-woven fabric, more specifically supporting a photocatalyst on an aramid fiber cloth, a fluorine resin cloth, etc. is suggested (see, for example, Patent Document 4). However, there was encountered a problem that the amount of the catalyst supported is small, too.
[Patent Document 1] JP-A-2000-288569
[Patent Document 2] JP-A-2000-271488
[Patent Document 3] JP-A-2000-218170
[Patent Document 4] JP-A-9-267043

### DISCLOSURE OF THE INVENTION

A primary object of the invention is to overcome the problems involved in the foregoing conventional technologies and to provide a fiber structure having both thorough flexibility and catalyst supporting performance.

In addition, another object of the invention is to provide a process for producing a fiber structure having an ability to degrade harmful chemicals by an extremely simple method.

### BRIEF DESCRIPTION OF THE DRAWINGS

Fig. 1 is a schematic view of a production device for explaining one embodiment of a production process of the invention.
Fig. 2 is a schematic view of a production device for explaining one embodiment of a production process of the invention.
Fig. 3 is an electron microscopic photograph (photographing magnification: 2,000 times) by taking a picture of the surface of a fiber structure as obtained by operations of Example 1.
Fig. 4 is an electron microscopic photograph (photographing magnification: 8,000 times) by taking a picture of the surface of a fiber structure as obtained by operations of Example 1 by a scanning electron microscope.
Fig. 5 is an electron microscopic photograph (photographing magnification: 50,000 times) by taking a picture of the surface of a catalyst-supporting fiber structure as obtained by operations of Example 1 by a scanning electron microscope.
Fig. 6 is an electron microscopic photograph (photographing magnification: 2,000 times) by taking a picture of the surface of a fiber structure as obtained by operations of Example 2 by a scanning electron microscope.
Fig. 7 is an electron microscopic photograph (photographing magnification: 8,000 times) by taking a picture of the surface of a fiber structure as obtained by operations of Example 2 by a scanning electron microscope.
Fig. 8 is an electron microscopic photograph (photographing magnification: 20,000 times) by taking a picture of the surface of a fiber structure as obtained by operations of Example 3 by a scanning electron microscope.
Fig. 9 is an electron microscopic photograph (photographing magnification: 20,000 times) by taking a picture of the surface of a fiber structure as obtained by operations of Example 4 by a scanning electron microscope.
Fig. 10 is an electron microscopic photograph (photographing magnification: 8,000 times) by taking a picture of the surface of a catalyst-supporting fiber structure as obtained by operations of Example 5 by a scanning electron microscope.
Fig. 11 is an electron microscopic photograph (photographing magnification: 20,000 times) by taking a picture of the surface of a catalyst-supporting fiber structure as obtained by operations of Example 5 by a scanning electron microscope.
Fig. 12 is an X-ray diffraction pattern of a catalyst-supporting fiber structure as obtained by operations of Example 5; and in the graph of Fig. 12, the ordinate is an X-ray diffraction intensity (cps), and the abscissa is a diffraction angle 2θ (deg.).
Fig. 13 is an X-ray diffraction pattern of a fiber structure as obtained by operations of Comparative Example 3; and in the graph of Fig. 13, the ordinate is an X-ray diffraction intensity (cps), and the abscissa is a diffraction angle 2θ (deg.).
Fig. 14 is an electron microscopic photograph (photographing magnification: 8,000 times) by taking a picture of the surface of a catalyst-supporting fiber structure as obtained by operations of Example 6 by a scanning electron microscope.
Fig. 15 is an electron microscopic photograph (photographing magnification: 8,000 times) by taking a picture of the surface of a catalyst-supporting fiber structure as obtained by operations of Example 7 by a scanning electron microscope.
Fig. 16 is an electron microscopic photograph (photographing magnification: 2,000 times) by taking a picture of the surface of a catalyst-supporting fiber structure as obtained by operations of Example 8 by a scanning electron microscope.
Fig. 17 is an electron microscopic photograph (photographing magnification: 8,000 times) by taking a picture of the surface of a catalyst-supporting fiber structure as obtained by operations of Example 9 by a scanning electron microscope.
Fig. 18 is an electron microscopic photograph (photographing magnification: 8,000 times) by taking a picture of the surface of a catalyst-supporting fiber structure as obtained by operations of Example 10 by a scanning electron microscope.
Fig. 19 is an electron microscopic photograph (photographing magnification: 2,000 times) by taking a picture of the surface of a catalyst-supporting fiber structure as obtained by operations of Example 11 by a scanning electron microscope.
Fig. 20 is an electron microscopic photograph (photographing magnification: 2,000 times) by taking a picture of the surface of a catalyst-supporting fiber structure as obtained by operations of Example 12 by a scanning electron microscope.
Fig. 21 is an electron microscopic photograph (photographing magnification: 2,000 times) by taking a picture of the surface of a catalyst-supporting fiber structure as obtained by operations of Example 13 by a scanning electron microscope.
Fig. 22 is an electron microscopic photograph (photographing magnification: 8,000 times) by taking a picture of the surface of a fiber structure as obtained by operations of Comparative Example 4 by a scanning electron microscope.
Fig. 23 is an electron microscopic photograph (photographing magnification: 8,000 times) by taking a picture of the surface of a fiber structure as obtained by operations of Comparative Example 5 by a scanning electron microscope.

### BEST MODE FOR CARRYING OUT THE INVENTION

The invention will be hereunder described in detail.

The term "fiber structure" as referred to in the invention means a three-dimensional structure as formed by an operation such as weaving, knitting, and laminating, and as a preferred example thereof, a non-woven fabric is enumerated.

The fiber for forming the fiber structure of the invention is required to have an average fiber diameter of not more than 1 µm. When the average fiber diameter exceeds 1 µm, since the specific surface area of the fiber is small, the amount of a catalyst which can be supported becomes small. Also, when the average diameter of the fiber is 0.01 µm or more, the strength of the resulting fiber structure is sufficient. The average diameter of the fiber constituting the subject fiber structure is preferably in the range of from 0.01 to 0.7 µm.

The fiber structure of the invention does not substantially contain a fiber having a fiber length of not more than 20 µm. It is meant by the terms "not substantially contain" as referred to herein that even when an arbitrary place is observed by a scanning electron microscope, a fiber having a fiber length of not more than 20 µm is not observed. When a fiber having a fiber length of not more than 20 µm is contained, a mechanical strength of the resulting fiber structure is insufficient, and therefore, such is not preferable. In the invention, it is preferable that a fiber having a fiber length of not more than 40 µm is not contained, and it is more preferable that a fiber having a fiber length of not more than 1 mm is not contained.

Furthermore, the catalyst which is supported on the fiber constituting the fiber structure is not particularly limited so far as it is able to degrade harmful chemicals. Examples thereof include photocatalysts such as titanium oxide; inorganic compounds such as allophane and fly ash; microorganic catalysts such as white rot fungi and trichloroethylene-degrading bacteria, and a variety of enzymes. Of these, inorganic compounds are preferable for use from the viewpoints of handling properties, activity, and the like; and photocatalysts, especially titanium oxide are more preferable for use. Incidentally, in the case of using titanium oxide, fine particles are preferable because they are likely supported on the fiber.

Incidentally, when a photocatalyst is used as the catalyst, what a part of the surface of the photocatalyst is covered by other inorganic compound is more preferable because the resulting catalyst-supporting fiber structure exhibits a high catalytic activity. Examples of other inorganic compound which covers the surface of the photocatalyst include ceramics such as silica and apatite.

In the invention, the foregoing catalyst may be in any supported state so far as it is supported on the fiber constituting the fiber structure. For example, the catalyst can take (a) a state that the catalyst adheres on the surface of the fiber constituting the fiber structure; (b) a state that the catalyst is contained inside the fiber, a part of which is contained such that it is exposed on the surface of the fiber; or (c) a state that the catalyst is a particle having a particle size in the range of from 1 to 100 µm, the subject particle is included in the fiber structure, the included catalyst particle is included in a part where a non-contact portion between the subject catalyst particle and the fiber constituting the fiber structure is present, and the surface of the included catalyst particle contains a non-contact portion between the subject catalyst particle and the fiber. The term "included" as referred to in the invention means a state that the catalyst is held such that it does not slide down from the fiber structure, and especially preferably a state that the inclusion is effected by the matter that the catalyst particle at least comes into contact with one or plural fibers on the surface thereof and that the catalyst particle is embedded in the fiber structure.

In the fiber structure in the foregoing supported state (a), though there is a high possibility that the catalyst falls off from the fiber structure, the catalyst surface can be effectively utilized. Accordingly, this fiber structure can be used for applications in which factors of fall-off of the catalyst, such as mechanical stress and deformation, are hardly generated.

Furthermore, in the fiber structure in the foregoing supported state (b), though the exposed area of the catalyst surface is smaller than that in the foregoing supported state (a), the catalyst hardly falls off from the catalyst fiber structure. Accordingly, this fiber structure can be used for applications which are not suitable in the fiber structure in the foregoing supported state (a) and in which factors of fall-off of the catalyst are likely generated.

In addition, the fiber structure in the foregoing supported state (c) lies between the fiber structure in the foregoing supported state (a) and the fiber structure in the foregoing supported state (c).

Here, in the foregoing supported state (c), the foregoing catalyst particle must have a particle size in the range of from 1 to 100 µm. When the particle size is smaller than 1 µm, though the specific surface area of the catalyst which can contributes to the reaction is large, the absolute surface area is too small, and therefore, such is not preferable. Also, when it exceeds 100 µm, though the absolute area of the catalyst which can contribute to the reaction is large, the specific surface area of the catalyst is too small.

Incidentally, the term "particle size" as referred to herein means an average value of values in the largest portion of the sizes of particles as supported in the fiber structure, and may be a value of the primary particle size or may be a value of the particle size of an agglomerate as formed resulting from agglomeration of the catalyst particle in the fiber structure (so-called secondary agglomerated particle). A catalyst particle whose primary particle size is in the range of from 1 to 100 µm is preferable because it exhibits a higher activity. The particle size is more preferably from 1.5 µm to 30 µm.

In the invention, in the case of taking any of the foregoing supported states (a) to (c), the supported state may be properly selected depending upon the intended application. Also, plural fiber structures can be subjected to superimposing, sticking, etc. to form a composite structure. For example, by disposing the fiber structure in the foregoing supported state (b) in the outermost side and disposing the fiber structure in the foregoing supported state (a) in the innermost side, it is possible to reduce fall-off of the catalyst as a whole of the fiber structure; or by disposing vice versa, it is possible to intentionally fall off a part of the catalyst of the fiber structure while holding the catalyst as a whole of the fiber structure.

Examples of the fiber which forms the fiber structure of the invention include organic polymers such as synthetic polymers and natural polymers; and inorganic compounds such as glass fiber and titania fiber. Of these, fibers made of an organic polymer are preferable in view of mechanical properties and handling properties.

Examples of the foregoing organic polymers include polyacrylonitrile, poly(methyl methacrylate), poly(ethyl methacrylate), poly(n-propyl methacrylate), poly(n-butyl methacrylate), poly(methyl acrylate), poly(ethyl acrylate), poly(butyl acrylate), a poly(acrylonitrile-methacrylate) copolymer, poly(vinylidene chloride), poly(vinyl chloride), a poly(vinylidene chloride-acrylate) copolymer, polyethylene, polypropylene, poly-4-methylpentene-1, polystyrene, aramid, poly(p-phenylene terephthalamide), a poly(p-phenylene tetrephthalamide-3,4'-oxydiphenylene terephthalamide) copolymer, poly(m-phenylene isophthalamide), polybenzimidazole, poly(p-phenylene pyromellitimide), poly(4,4'-oxydiphenylene pyromellitimide), poly(vinyl alcohol), cellulose, cellulose diacetate, cellulose triacetate, methyl cellulose, propyl cellulose, benzyl cellulose, cellulose acetate butyrate, poly(ethylene sulfide), poly(vinyl acetate), poly(ethylene terephthalate), poly(ethylene naphthalate), poly(lactic acid), poly(glycolic acid), a poly(lactic acid)-poly(glycolic acid) copolymer, polycaprolactone, poly(glutamic acid), polyarylate, polycarbonate, poly(ether sulfone), poly(ether ether sulfone), poly(vinylidene fluoride), polyurethane, poly(butylene succinate), poly(ethylene succinate), poly(hexamethylene carbonate), poly(vinyl isocyanate), poly(butyl isocyanate), poly(vinyl acetate), poly(vinyl methyl ether), poly(vinyl ethyl ether), poly(vinyl n-propyl ether), poly(vinyl isopropyl ether), poly(vinyl n-butyl ether), poly(vinyl isobutyl ether), poly(vinyl tert-butyl ether), poly(N-vinylpyrrolidone), poly(N-vinylcarbazole), poly(4-vinylpyridine), poly(vinyl methyl ketone), poly(methyl isopropenyl ketone), poly(ethylene oxide), poly(propylene oxide), poly(cyclopentene oxide), poly(styrene sulfone), nylon 6, nylon 66, nylon 11, nylon 12, nylon 610, nylon 612, poly(vinylidene fluoride), poly(vinyl bromide), poly(chlorotrifluoroethylene), polychloroprene, a ring opening polymer of a norbornene based monomer and a hydrogenated product thereof, fibroin, natural rubber, chitin, chitosan, collagen, and zein. These materials may be copolymers or mixtures thereof and can be selected from various of viewpoints.

As an example of the foregoing selection, for example, polyacrylonitrile and copolymers thereof, or compounds resulting from a thermal treatment of the same can be used in view of handling properties and mechanical properties. Also, in order that the fiber structure itself be not degraded even by influences from any catalyst as supported on the fiber, a halogen atom-containing organic polymer (for example, poly(vinyl chloride), poly(vinylidene chloride), a poly(vinylidene chloride-acrylate) copolymer, poly(vinylidene fluoride), poly(vinyl bromide), polychlorotrifluoroethylene, and polychloroprene), especially poly(vinyl chloride) may be used. Poly(lactic acid) may also be used so as to bring biodegradability to the fiber structure and enable it to be spontaneously degraded in the ground after use over a long period of time.

Furthermore, a fiber which has been subjected to a thermal treatment or chemical treatment after the fiber formation may be used. In addition, if desired, it is possible to mix an emulsion or an organic or inorganic powder with the foregoing polymer and use the mixture.

Though the catalyst-supporting fiber structure of the invention may be used singly, it can be combined with other member adaptive with handling properties or other requirements and then used. For example, by using, as a collecting substrate, a non-woven fabric or fabric, a film, or the like which can become a supporting base material and forming a fiber laminate thereon, it is possible to prepare a member containing a combination of the supporting base material and the subject fiber laminate.

For the catalyst-supporting fiber structure of the invention, any production process may be employed so far as a catalyst-supporting fiber structure having the foregoing average fiber diameter and fiber length can be obtained.

Incidentally, among embodiments of producing the catalyst-supporting structure of the invention, processes for producing those of the foregoing supported states (a) to (c) will be hereunder described.

The fiber structure having the foregoing supported state (a) can be obtained by a production process of a catalyst-supporting fiber structure including, for example, a step for dissolving a fiber-forming organic polymer to produce a solution; a step for spinning the foregoing solution by the electrospinning method; a step for obtaining a fiber structure as accumulated on a collecting substrate by the foregoing spinning; and a step for supporting a catalyst on the foregoing fiber structure.

The electrospinning method as referred to herein is a method for discharging a solution having a fiber-forming compound dissolved therein into an electrostatic field as formed between electrodes, stringing the solution towards the electrodes, and accumulating a fibrous substance as formed on a collecting substrate to obtain a fiber structure. The fibrous substance as referred to herein exhibits not only a state that a solvent which has dissolved the fiber-forming compound therein is evaporated off to form a fiber accumulation but also a state that the subject solvent is contained in the fibrous substance.

Next, a device which is used in the electrospinning method will be described.

As the foregoing electrode, any electrode made of a metal, an inorganic material or an organic material is useful so far as it exhibits conductivity. Also, an electrode having, on an insulating material, a thin film made of a metal, an inorganic material or an organic material, which exhibits conductivity, may be used.

Furthermore, the electrostatic field is formed between a pair of electrodes or among plural electrodes. A high voltage may be applied to any electrode. For example, this includes the case of using three electrodes in total of two high-voltage electrodes having a different voltage value (for example, 15 kV and 10 kV) and one earthed electrode and also includes the case of using electrodes of the number exceeding 3.

Next, production procedures of the fiber constituting the fiber structure of the invention according to the electrospinning method will be described one by one.

First of all, a fiber-forming organic polymer is dissolved to produce a solution. Here, the concentration of the fiber-forming organic polymer in the solution is preferably from 1 to 30 % by weight. When the subject concentration is less than 1 % by weight, it is difficult to form a fiber structure because the concentration is too low. Also, when it exceeds 30 % by weight, the average diameter of the resulting fiber is large, and therefore, such is not preferable. The concentration is more preferably from 2 to 20 % by weight.

Furthermore, a solvent for dissolving the foregoing organic polymer is not particularly limited so far as it can dissolve the fiber-forming organic polymer and can be evaporated in a step for spinning by the electrospinning method to form a fiber. Examples thereof include acetone, chloroform, ethanol, isopropanol, methanol, toluene, tetrahydrofuran, water, benzene, benzyl alcohol, 1,4-dioxane, propanol, methylene chloride, carbon tetrachloride, cyclohexane, cyclohexanone, phenol, pyridine, trichloroethane, acetic acid, formic acid, hexafluoroisopropanol, hexafluoroacetone, N,N-dimethylformamide, acetonitrile, N-methylmorpholine-N-oxide, 1,3-dioxolan, methyl ethyl ketone, N-methylpyrrolidone, and mixed solvents of the foregoing solvents.

Of these, N,N-dimethylformamide, tetrahydrofuran, chloroform, and a mixed solvent of N,N-dimethylformamide and tetrahydrofuran are preferable for use in view of handling properties, physical properties, and the like.

Next, the step for spinning the foregoing solution by the electrospinning method will be described. In order to discharge the subject solution into an electrostatic field, an arbitrary method can be employed. For example, by feeding the solution into a nozzle, the solution may be placed at an adequate position in the electrostatic field and stringed from that nozzle by an electric field to form a fiber.

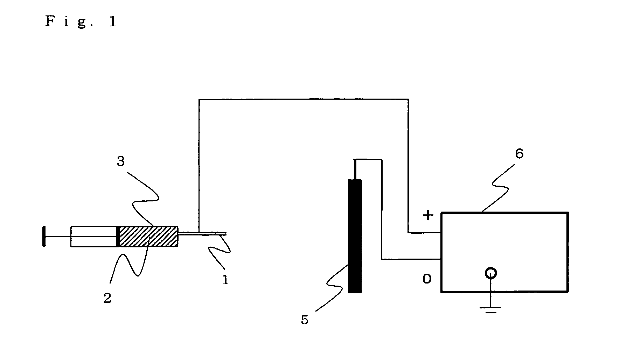

This step will be more specifically described below with reference to Fig. 1.

A solution injection nozzle (1 in Fig. 1) in the form of an injection needle to which a voltage is applied by appropriate means, for example, a high-voltage generator (6 in Fig. 1) is set up in a tip portion of a solution holding tank (3 in Fig. 1) in the form of a syringe cylinder, and a solution (2 in Fig. 1) is guided to a tip portion of the solution injection nozzle. A tip of the subject solution injection nozzle (1 in Fig. 1) is disposed at a proper distance from an earthed fibrous substance collecting electrode (5 in Fig. 1), and the solution (2 in Fig. 1) is injected from the tip portion of the subject solution injection nozzle (1 in Fig. 1), whereby a fibrous substance can be formed between this nozzle tip portion and the fibrous substance collecting electrode (5 in Fig. 1).

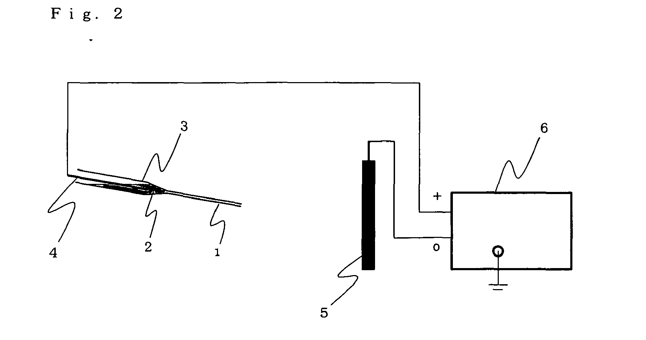

Furthermore, when another embodiment is described with reference to Fig. 2, a fine droplet (not shown) of the subject solution can also be introduced in an electrostatic field. On this occasion, only one requirement is to place a solution (2 in Fig. 2) in an electrostatic field and hold it far from a fibrous substance collecting electrode (5 in Fig. 2) at a distance such that the fiber formation can occur. For example, it is also possible to insert an electrode (4 in Fig. 2) opposing to the fibrous substance collecting electrode directly in the solution (2 in Fig. 2) in a solution holding tank (3 in Fig. 2) having a solution injection nozzle (1 in Fig. 2).

In the case of feeding the subject solution into the electrostatic field from the nozzle, it is also possible to raise the production rate of a fibrous substance by using several nozzles in parallel. Also, the distance between electrodes depend upon the charge amount, the nozzle size, the injection amount of the solution from the nozzle, the solution concentration, and the like, a distance of from 5 to 20 cm was suitable at approximately 10 kV. Also, the electrostatic potential to be applied is generally from 3 to 100 kV, preferably from 5 to 50 kV, and more preferably from 5 to 30 kV. A desired potential may be made by a conventionally known arbitrary proper method.

While the foregoing two embodiments are concerned with the case where the electrode also serves as a collecting substrate, it is possible to set up a material capable of becoming a collecting substrate between electrodes to provide a collecting substrate separately from the electrodes, thereby collecting a fiber accumulation therein. In this case, for example, by setting up a substance in the form of a belt between the electrodes and making it serve as a collecting substrate, it also becomes possible to realize continuous production.

Next, a step for obtaining a fiber structure as accumulated on the collecting substrate will be described. In the invention, during a course of stringing the subject solution towards the collecting substrate, the solvent is evaporated depending upon the condition, whereby a fibrous substance is formed. Though the solvent is completely evaporated at the usual room temperature during a course until the fibrous substance is collected on the collecting substrate, if the evaporation of the solvent is insufficient, the solution may be stringed under a reduced pressure condition. At a point of time when the fibrous material is collected on this collecting substrate, a fiber structure which meets at least the foregoing fiber average diameter and fiber length is formed. Furthermore, though the stringing temperature depends upon the evaporation behavior of the solvent or the viscosity of a spinning solution, it is usually in the range of from 0 to 50°C.

Subsequently, a catalyst may be supported on the fiber structure as obtained by the foregoing electrospinning method. A method for supporting the catalyst is not particularly limited. However, a method for dipping the foregoing fiber structure in a catalyst-containing solution, thereby bringing the catalyst into contact with the fiber surface; and a method for coating a catalyst-containing solution on the foregoing fiber structure by an operation such as spray coating are preferable from the standpoints that the operation is easy and that uniform supporting is possible. The catalyst-containing solution preferably contains a component which can become a binder between the fiber structure and the catalyst.

Next, the fiber structure having the foregoing supported state (b) can be obtained by a production process of a catalyst-supporting fiber structure including, for example, a step for dissolving a fiber-forming organic polymer and a catalyst precursor in a solvent to produce a solution; a step for spinning the foregoing solution by the electrospinning method; a step for obtaining a fiber structure as accumulated on a collecting substrate by the foregoing spinning; and a step for treating the catalyst precursor contained in the foregoing fiber structure to form a catalyst.

In this production process, a solution is first produced by dissolving a fiber-forming organic polymer and a catalyst precursor. Here, as the catalyst precursor, for example, an inorganic compound which can become a catalyst by a sol-gel reaction can be used. Examples of the subject inorganic compound include metal alkoxides and metal chlorides. Specifically, preferred examples thereof include titanium alkoxides, tin alkoxides, silicon alkoxides, and aluminum alkoxides. Of these, titanium alkoxides are especially preferable for use. In addition, as the foregoing titanium alkoxides, titanium tetraisopropoxide, titanium tetrabutoxide, and the like can be preferably used in view of easy availability.

Furthermore, the concentration of the fiber-forming organic polymer against the solvent in the solution is preferably from 1 to 30 % by weight. When the concentration of the fiber-forming organic polymer is less than 1 % by weight, it is difficult to form a fiber structure because the concentration is too low, and therefore, such is not preferable. Also, when it exceeds 30 % by weight, the fiber diameter of the resulting fiber structure is large, and therefore, such is not preferable. The concentration of the fiber-forming organic polymer against the solvent in the solution is more preferably from 2 to 20 % by weight.

Moreover, the concentration of the catalyst precursor against the solvent in the solution is preferably from 1 to 30 % by weight. When the concentration of the catalyst precursor is less than 1 % by weight, the amount of a catalyst as formed is small, and therefore, such is not preferable. Also, when it exceeds 30 % by weight, it is difficult to form a fiber structure, and therefore, such is not preferably. The concentration of the catalyst precursor against the solvent in the solution is more preferably from 2 to 20 % by weight.

Furthermore, the solvent may be used singly, or a combination of plural solvents may be used. The subject solvent is not particularly limited so far as it can dissolve the fiber-forming organic polymer and the catalyst precursor therein, can be evaporated in a step for spinning by the electrospinning method and can be probable to form a fiber. The solvent which is used in the production in the foregoing supported state (a) can be used.

In addition, in the production process of the invention, a coordinating compound may be further incorporated into the solvent. The subject coordinating compound is not particularly limited so far as it can control a reaction of the catalyst precursor and can be probable to form a fiber structure. Examples thereof include carboxylic acids, amides, esters, ketones, phosphines, ethers, alcohols, and thiols.

Furthermore, in this production process, the catalyst precursor contained in the fiber structure as obtained by the electrospinning method is treated to form a catalyst.

In the case where a metal alkoxide or a metal chloride is used as the catalyst precursor, if desired, there may be employed a method in which the fiber structure as obtained by the foregoing electrospinning method is charged in a closed vessel such as an autoclave and subjected to a hydrothermal treatment in a solution or its vapor. The hydrothermal treatment is not particularly limited so far as it is possible to promote hydrolysis of the residual metal alkoxide contained in the foregoing fiber structure, to promote a polycondensation reaction of a metal hydroxide and to promote crystallization of a metal oxide. The treatment temperature is preferably from 50°C to 250°C, and more preferably from 70°C to 200°C. When the treatment temperature is lower than 50°C, crystallization of a metal oxide is not promoted, and therefore, such is not preferable. When it is higher than 250°C, the strength of an organic polymer to be used as a supporting material is declined, and therefore, such is not preferable. While pure water is usually used as the liquid, the pH of the liquid is preferably from 2 to 10, and more preferably from 3 to 9.

In addition, the foregoing fiber structure may be dried under hot air, if desired. By drying under hot air, it is possible to promote crystallization of a metal oxide. The foregoing temperature is preferably from 50°C to 150°C, and more preferably from 80°C to 120°C.

Incidentally, with respect to the matters which are not described in this production process, the descriptions regarding the process for producing the fiber structure in the supported state (a) can be quoted as they are.

In addition, the fiber structure having the foregoing supported state (c) can be obtained by a production process of a catalyst-supporting fiber structure including, for example, a step for dissolving a fiber-forming compound in a solvent and further dispersing a catalyst particle in the resulting solution to produce a dispersion solution; a step for spinning the foregoing dispersion solution by the electrospinning method; and a step for obtaining a catalyst-supporting fiber structure as accumulated on a collecting substrate by the foregoing spinning.

First of all, there is a step for producing a dispersion solution having a catalyst particle dispersed in a solution of a fiber-forming compound dissolved in a solvent. The concentration of the fiber-forming compound in the dispersion solution in the production process of the invention is preferably from 1 to 30 % by weight. When the concentration of the fiber-forming compound is less than 1 % by weight, it is difficult to form a fiber structure because the concentration is too low and therefore, such is not preferable. Also, when it exceeds 30 % by weight, the fiber diameter of the resulting fiber structure is large, and therefore, such is not preferable. The concentration of the fiber-forming compound is more preferably from 2 to 20 % by weight.

The concentration of the catalyst particle as dispersed in the dispersion solution in the production process of the invention is preferably from 0.1 to 30 % by weight. When the concentration of the catalyst particle as dispersed is less than 0.1 %, the catalytic activity of the resulting fiber structure is too low, and therefore, such is not preferable. Also, when it exceeds 30 % by weight, the strength of the resulting fiber structure is low, and therefore, such is not preferable. The concentration of the catalyst particle as dispersed is more preferably from 0.5 to 25 % by weight.

In the production process of the invention, the fiber-forming compound may be first dissolved in the solvent to form a solution, followed by dispersing the catalyst particle; the fiber-forming compound and the catalyst particle may be simultaneously added to the solvent; or the fiber-forming compound may be dissolved in the solvent to which the catalyst particle has been previously added. Though a method for dispersing the catalyst particle is not particularly limited, examples thereof include stirring and an ultrasonic treatment.

Incidentally, with respect to the matters which are not described in this production process, the descriptions regarding the process for producing the fiber structure in the supported state (a) can be quoted as they are.

### EXAMPLES

The invention will be hereunder described with reference to the following Examples, but it should not be construed that the invention is limited to these Examples. Furthermore, the evaluation items in the respective Examples and Comparative Examples were carried out according to the following methods.

### Average diameter of fiber:

Twenty places were chosen at random from a photograph as obtained by taking a picture of the surface of a fiber structure as obtained by a scanning electron microscope (S-2400, manufactured by Hitachi, Ltd.) (magnification: 8,000 times) and measured for a fiber diameter. An average value of all fiber diameters (n = 20) was determined and designated as an average diameter of fiber.

### Confirmation of the presence of fiber having a fiber length of not more than 20 µm:

A photograph as obtained by taking a picture of the surface of a fiber structure as obtained by a scanning electron microscope (S-2400, manufactured by Hitachi, Ltd.) (magnification: 2,000 times) was observed, and it was confirmed whether or not a fiber having a fiber length of not more than 20 µm was present.

### Catalyst particle size:

Five places were chosen at random from a photograph as obtained by taking a picture of the surface of a fiber structure as obtained by a scanning electron microscope (S-2400, manufactured by Hitachi, Ltd.) (magnification: 8,000 times) and measured for a diameter of the catalyst particle portion. An average value of all diameters (n = 5) was determined and designated as a catalyst particle size.

Incidentally, the diameter in the longest portion of the catalyst particle within the range where it could be confirmed on the photograph was employed.

### Catalytic activity evaluation:

A fiber structure as a sample was cut out into a size of 2 cm in length and 2 cm in width. This was dipped in 5 mL of a 10 ppm Methylene Blue aqueous solution.

The sample was irradiated with light of a region of from 295 to 450 nm in an intensity of 60 mW/cm² for a prescribed period of time by using EYE SUPER UV TESTER "SUV-F11" as manufactured by Iwasaki Electric Co., Ltd. Also, a Methylene Blue aqueous solution having a catalyst-non-supporting fiber structure dipped therein was irradiated as a control sample.

With respect to each of the resulting Methylene Blue aqueous solutions, an absorbance at 665 nm was measured by using UV-2400PC as manufactured by Shimadzu Corporation. In the Methylene Blue aqueous solution having a catalyst-supporting fiber structure dipped therein and the Methylene blue aqueous solution having a catalyst-non-supporting fiber structure dipped therein, the absorbance of the Methylene Blue aqueous solution having a catalyst-supporting fiber structure dipped therein was smaller so that it was confirmed that a height of the catalytic activity can be evaluated by degradation of Methylene Blue.

### Example 1

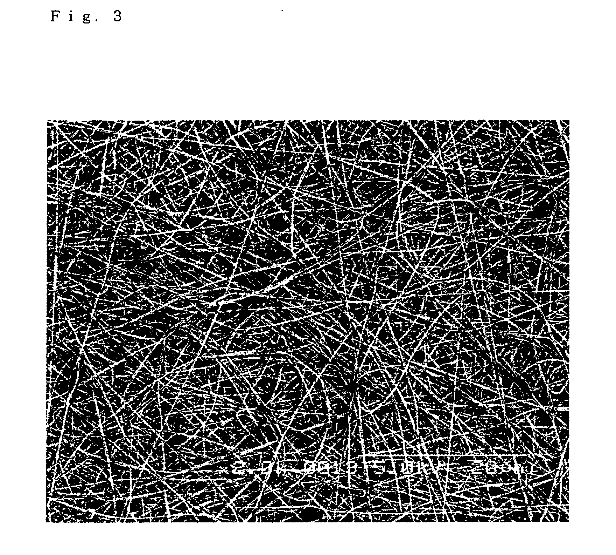

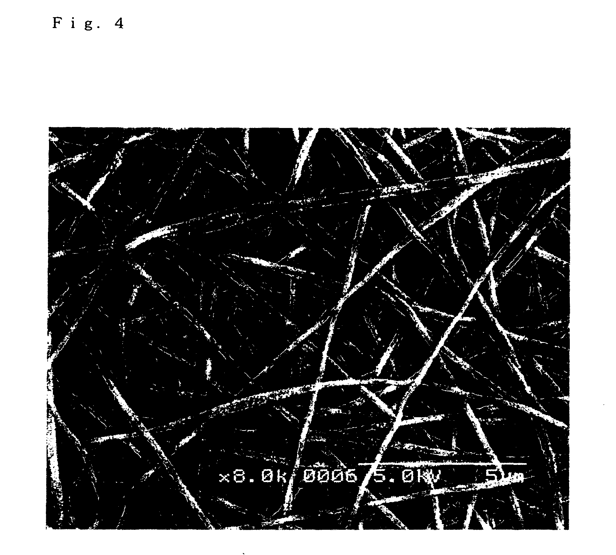

A solution consisting of 1 part by weight of polyacrylonitrile (manufactured by Wako Pure Chemical Industries, Ltd.) and 9 parts by weight of N,N-dimethylformamide (a reagent special grade, manufactured by Wako Pure Chemical Industries, Ltd.) was prepared. By using a device as shown in Fig. 2, the subject solution was discharged into a fibrous substance collecting electrode (5 in Fig. 2) for 30 minutes. An inner diameter of an injection nozzle (1 in Fig. 2) was 0.8 mm, a voltage was 12 kV, and a distance from the injection nozzle (1 in Fig. 2) to the fibrous substance collecting electrode (5 in Fig. 2) was 10 cm. The resulting fiber structure had a basis weight of 3 g/m². The resulting fiber structure was observed by a scanning electron microscope (S-2400, manufactured by Hitachi, Ltd.) and found to have an average fiber diameter of 0.2 µm. A fiber having a fiber length of not more than 20 µm was not observed. Scanning electron microscope photographs of the resulting fiber structure are shown in Fig. 3 and Fig. 4.

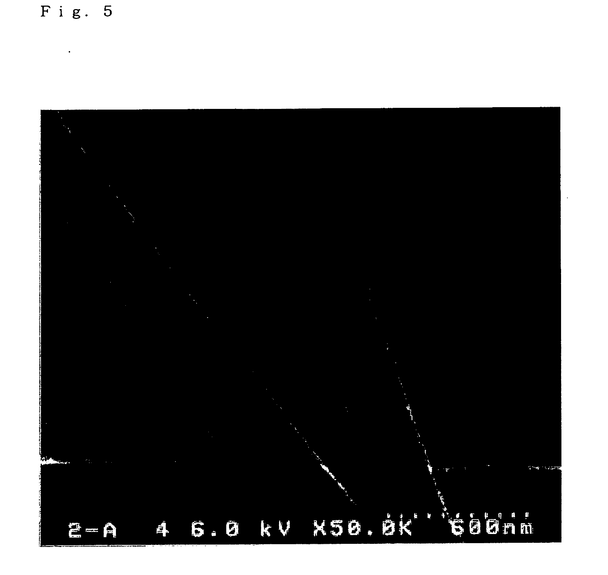

Subsequently, the resulting fiber structure was dipped in a photocatalyst coating agent (PALTITAN 5607, manufactured by Nihon Parkerizing Co., Ltd.) for 10 minutes and then dried to obtain a catalyst-supporting fiber structure. The ultimately obtained results of catalytic activity evaluation are shown in Table 1. Also, a scanning electron microscope photograph of the resulting catalyst-supporting fiber structure is shown in Fig. 5.

### Example 2

The same operations as in Example 1 were followed, except that after forming a fiber structure, the fiber structure was thermally treated at 300°C for 3 hours.

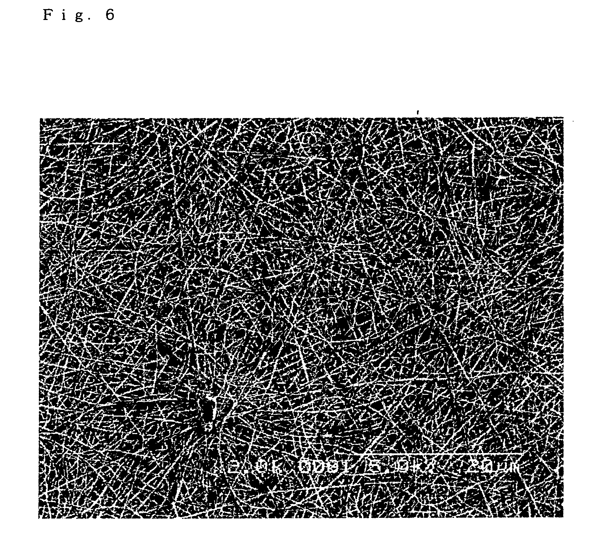

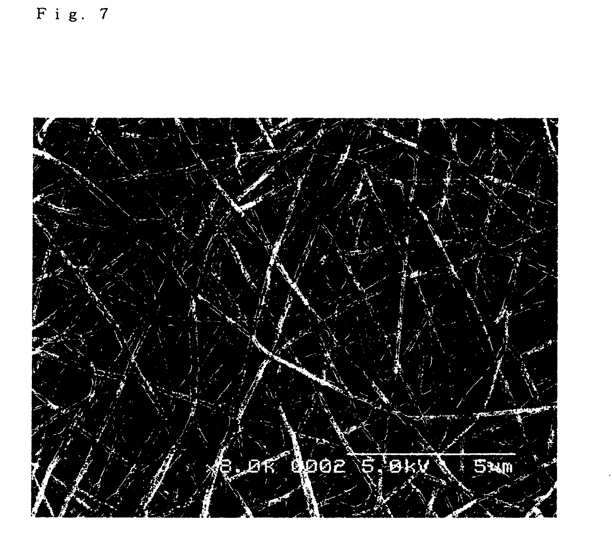

The fiber structure as obtained after the thermal treatment was observed by a scanning electron microscope (S-2400, manufactured by Hitachi, Ltd.) and found to have an average fiber diameter of 0.2 µm. A fiber having a fiber length of not more than 20 µm was not observed. Scanning electron microscope photographs of the resulting fiber structure are shown in Fig. 6 and Fig. 7.

The resulting fiber structure was subjected to the same operations as in Example 1 to obtain a catalyst-supporting fiber structure. The ultimately obtained results of catalytic activity evaluation are shown in Table 1.

### Comparative Example 1

Polyacrylonitrile (manufactured by Wako Pure Chemical Industries, Ltd.) was dissolved in N,N-dimethylformamide (a reagent special grade, manufactured by Wako Pure Chemical Industries, Ltd.) to prepare a dope having a polymer concentration of 7.5 %.

This was subjected to wet spinning by extruding into a coagulation bath containing water as a coagulating liquid and then stretched three times in the coagulation bath to obtain a fiber having a fiber diameter of 15 µm. A non-woven fabric having a basis weight of 6 g/m² was prepared from this fiber.

The resulting fiber agglomerate was subjected to the same operations as in Example 1 to obtain a catalyst-supporting fiber structure. The ultimately obtained results of catalytic activity evaluation are shown in Table 1. Incidentally, the fiber structure failed in flexibility.

### Example 3

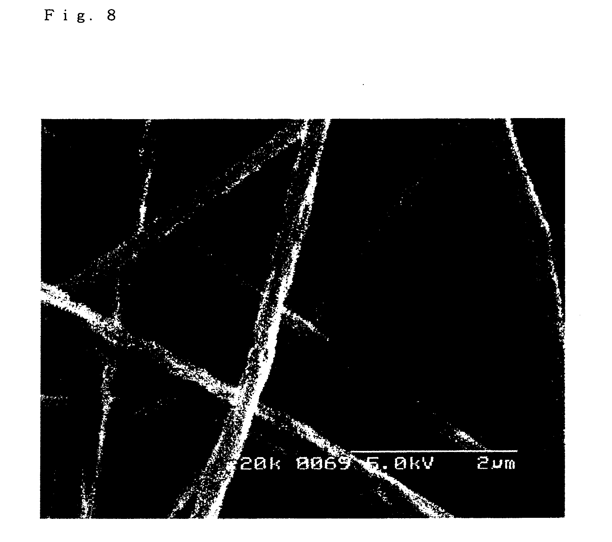

A solution consisting of 1 part by weight of poly(vinyl chloride) having a degree of polymerization of 1,300, 4.5 parts by weight of N,N-dimethylformamide (a special grade, manufactured by Wako Pure Chemical Industries, Ltd.), and 4.5 parts by weight of tetrahydrofuran (a special grade, manufactured by Wako Pure Chemical Industries, Ltd.) was prepared. Subsequently, by using a device as shown in Fig. 1, the subject solution was discharged into a fibrous substance collecting electrode (5 in Fig. 1) for 60 minutes. An inner diameter of an injection nozzle (1 in Fig. 1) was 0.8 mm, a solution feed rate was 20 µL/min, a voltage was 12 kV, and a distance from the injection nozzle (1 in Fig. 1) to the fibrous substance collecting electrode (5 in Fig. 1) was 20 cm. The resulting fiber structure was a non-woven fabric having a basis weight of 36 g/m² and a thickness of 0.2 mm. The resulting fiber structure was observed by a scanning electron microscope (S-2400, manufactured by Hitachi, Ltd.) and found to have an average fiber diameter of 0.4 µm. A fiber having a fiber length of not more than 20 µm was not observed. A scanning electron microscope photograph of the surface of the resulting fiber structure is shown in Fig. 8.

Subsequently, a photocatalyst coating agent (PALTITAN 5607, manufactured by Nihon Parkerizing Co., Ltd.) was diluted with a methanol/isopropanol (weight ratio: 1/1) mixed solvent so as to have a catalyst concentration of 1 % by weight, thereby preparing a coating solution. This was coated on the fiber structure in a coating amount of 0.1 mL/cm² by using an air brush (E1306, manufactured by Kiso Power Tool Mfg. Co., Ltd., nozzle size: 0.4 mm), to obtain a catalyst-supporting fiber structure. The results of catalytic activity evaluation are shown in Table 1.

### Example 4

The same operations as in Example 3 were followed, except that the discharge time of the solution was changed from 60 minutes to 15 minutes, to form a fiber structure of a non-woven fabric form having a basis weight of 7.8 g/m² and a thickness of 0.05 mm.

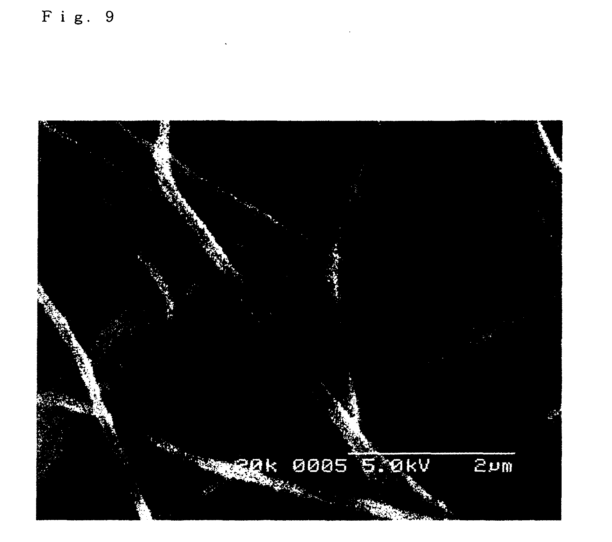

The resulting fiber structure was observed by a scanning electron microscope (S-2400, manufactured by Hitachi, Ltd.) and found to have an average fiber diameter of 0.3 µm. A fiber having a fiber length of not more than 20 µm was not observed. A scanning electron microscope photograph of the surface of the resulting fiber structure is shown in Fig. 9.

Subsequently, the foregoing fiber structure was dipped in the coating solution as prepared in Example 3 for 10 minutes and then dried to obtain a catalyst-supporting fiber structure. The results of catalytic activity evaluation are shown in Table 1.

### Comparative Example 2

A cloth (basis weight: 83 g/m²) made of multi-filaments of poly (vinyl chloride) of 84 dtex × 25 filaments (single fiber diameter: about 17.54 µm) was dipped in the coating solution in the same manner as in Example 2 to obtain a catalyst-supporting fiber structure. The results of catalytic activity evaluation are shown in Table 1. The resulting non-woven fabric failed in flexibility.

### Example 5

A solution consisting of 1 part by weight of poly(vinyl chloride) having a degree of polymerization of 1,300, 4.5 parts by weight of tetrahydrofuran (a special grade, manufactured by Wako Pure Chemical Industries, Ltd.), 4.5 parts by weight of N,N-dimethylformamide (a special grade, manufactured by Wako Pure Chemical Industries, Ltd.), and 1.1 parts by weight of titanium tetrabutoxide (a special grade, manufactured by Wako Pure Chemical Industries, Ltd.) was prepared. By using the device as shown in Fig. 2, the subject solution was discharged into the fibrous substance collecting electrode for 60 minutes. An inner diameter of the injection nozzle was 0.8 mm, a voltage was 12 kV, and a distance from the injection nozzle to the fibrous substance collecting electrode was 15 cm.

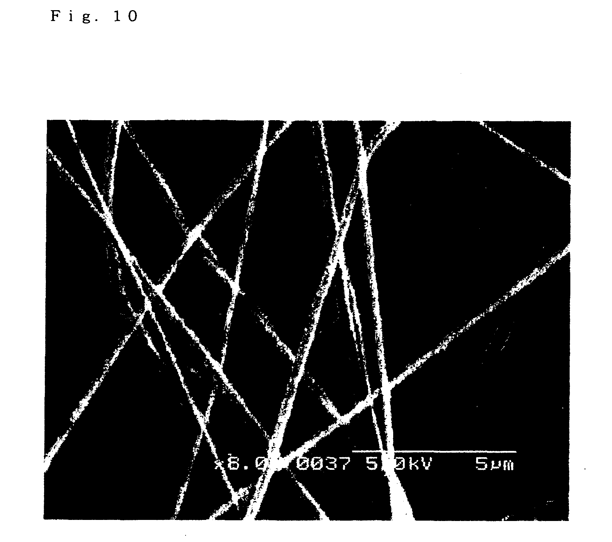

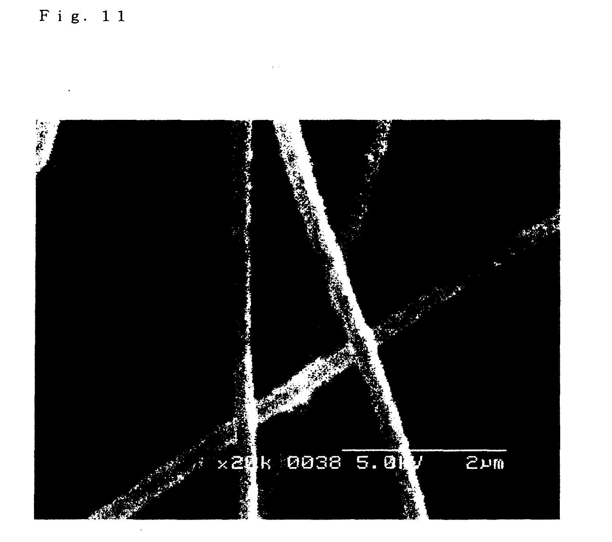

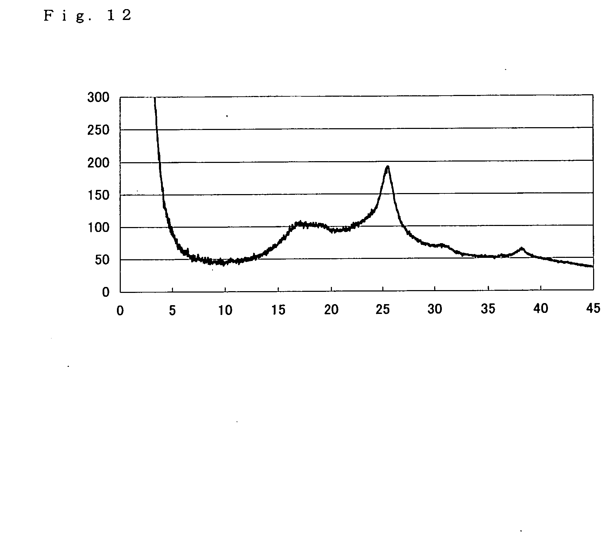

The resulting fiber structure was charged in an autoclave and held at 80°C for 17 hours in an aqueous solution at a pH of 3. The sample was washed with ion-exchanged water and dried to obtain a catalyst-supporting fiber structure having a basis weight of 32 g/cm². The resulting catalyst-supporting fiber structure was observed by a scanning electron microscope (S-2400, manufactured by Hitachi, Ltd.) and found to have an average fiber diameter of 0.5 µm. A fiber having a fiber length of not more than 20 µm was not observed. As a result of the X-ray diffraction of the resulting catalyst-supporting fiber structure, a peak was found at 2θ = 25.3°, and the formation of an anatase type crystal of titanium oxide was confirmed, whereby the formation of titanium oxide as a photocatalyst from the catalyst precursor was confirmed. Scanning electron microscope photographs of the surface of the resulting catalyst-supporting fiber structure are shown in Fig. 10 and Fig. 11; an X-ray diffraction pattern is shown in Fig. 12; and the results of catalytic activity evaluation are shown in Table 1.

### Comparative Example 3

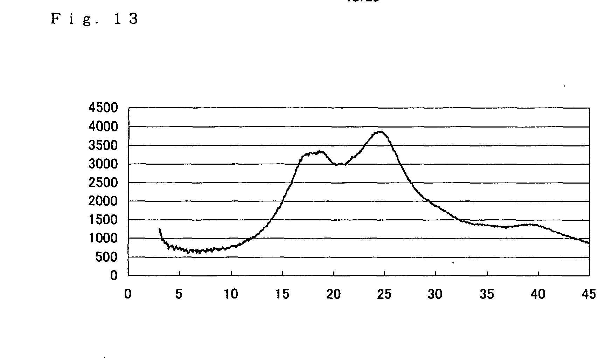

The same operations as in Example 5 were followed, except for using a solution consisting of 1 part by weight of poly(vinyl chloride) having a degree of polymerization of 1,300, 4.5 parts by weight of tetrahydrofuran (a special grade, manufactured by Wako Pure Chemical Industries, Ltd.), and 4.5 parts by weight of N,N-dimethylformamide (a special grade, manufactured by Wako Pure Chemical Industries, Ltd.), to obtain a fiber structure having a basis weight of 11 g/m². As a result of the X-ray diffraction of the resulting fiber structure, a peak was not found at 2θ = 25.3°. An X-ray diffraction pattern of the resulting fiber structure is shown in Fig. 13, and the results of catalytic activity evaluation are shown in Table 1.

### Example 6

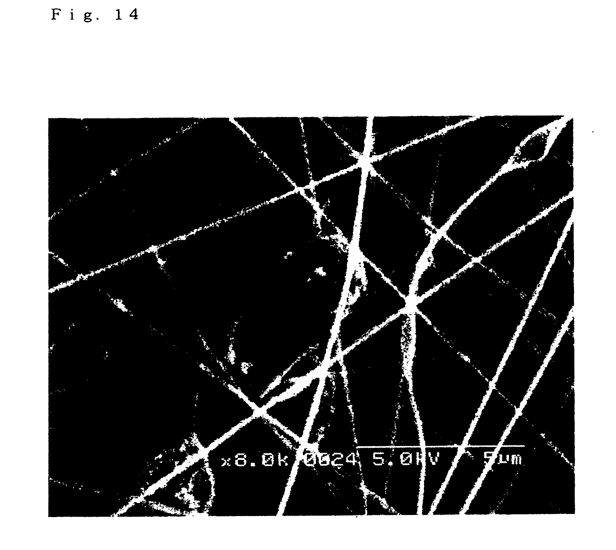

A solution consisting of 1 part by weight of polyacrylonitrile (manufactured by Wako Pure Chemical Industries, Ltd.), 9 parts by weight of N,N-dimethylformamide (a special grade, manufactured by Wako Pure Chemical Industries, Ltd.) and, as a catalyst, 1 part by weight of porous silica-coated titanium oxide (MUSKMELON TYPE PHOTOCATALYST, manufactured by Taihei Chemical Industrial Co., Ltd., particle size: 2 µm) was prepared. Subsequently, by using a device as shown in Fig. 1, the subject solution was discharged into a fibrous substance collecting electrode (5 in Fig. 1) for 30 minutes. An inner diameter of an injection nozzle (1 in Fig. 1) was 0.8 mm, a solution feed rate was 20 µL/min, a voltage was 12 kV, and a distance from the injection nozzle (1 in Fig. 1) to the fibrous substance collecting electrode (5 in Fig. 1) was 15 cm. The resulting fiber structure had a basis weight of 5 g/m². A scanning electron microscope photograph of the surface of the resulting fiber structure is shown in Fig. 14. An average fiber diameter was 0.15 µm, a fiber having a fiber length of not more than 20 µm was not observed, and a catalyst particle size was 3 µm. The results of catalytic activity evaluation of the resulting catalyst-supporting fiber structure are shown in Table 1.

### Example 7

The same operations as in Example 6 were followed, except for using, as the catalyst, porous silica-coated titanium oxide (MUSKMELON TYPE PHOTOCATALYST, manufactured by Taihei Chemical Industrial Co., Ltd., particle size: 5 µm).

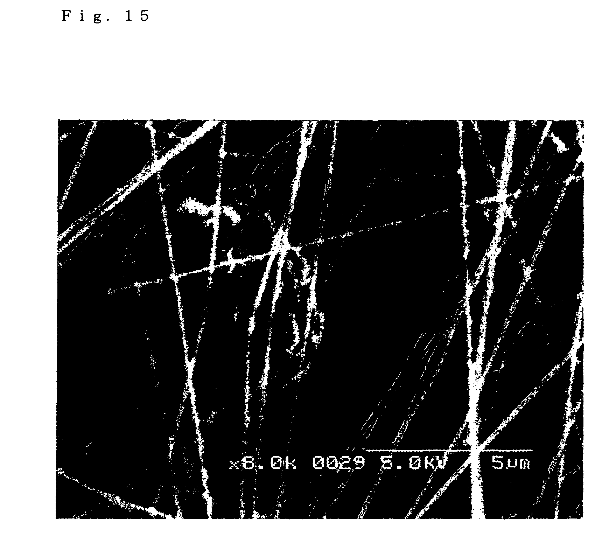

The resulting fiber structure had a basis weight of 5 g/m² and an average fiber diameter of 0.15 µm, a fiber having a fiber length of not more than 20 µm was not observed, and a catalyst particle size was 5 µm. A scanning electron microscope photograph of the fiber structure is shown in Fig. 15. The results of catalytic activity evaluation of the resulting catalyst-supporting fiber structure are shown in Table 1.

### Example 8

The same operations as in Example 6 were followed, except for using, as the catalyst, porous silica-coated titanium oxide (MUSKMELON TYPE PHOTOCATALYST, manufactured by Taihei Chemical Industrial Co., Ltd., particle size: 15 µm).

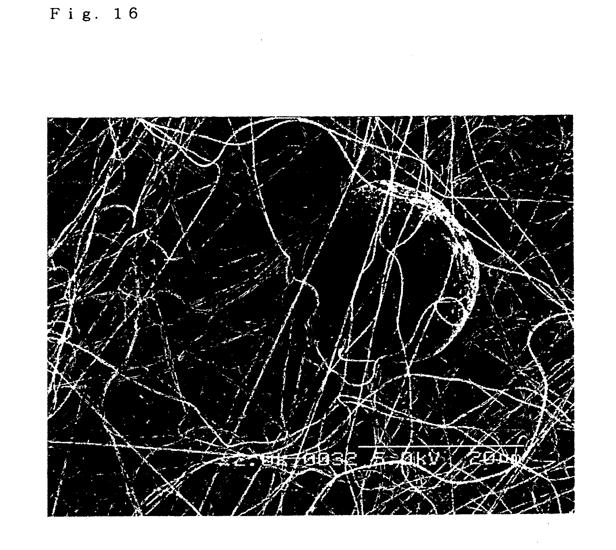

The resulting fiber structure had a basis weight of 5 g/m² and an average fiber diameter of 0.15 µm, a fiber having a fiber length of not more than 20 µm was not observed, and a catalyst particle size was 13 µm. A scanning electron microscope photograph of the fiber structure is shown in Fig. 16. The results of catalytic activity evaluation of the resulting catalyst-supporting fiber structure are shown in Table 1.

### Example 9

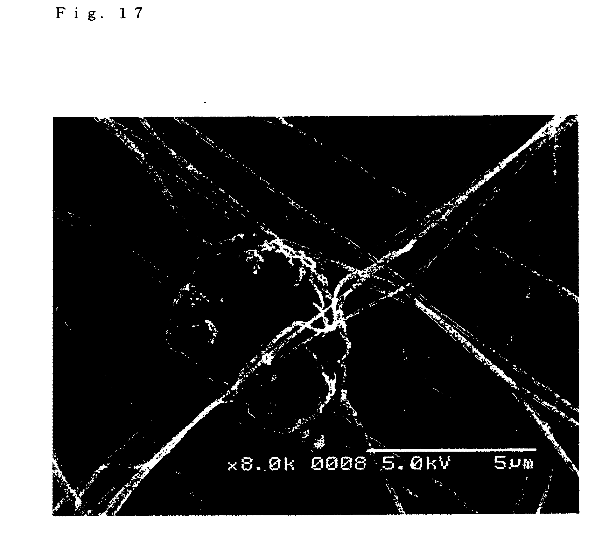

The same operations as in Example 6 were followed, except for using, as the catalyst, apatite-coated titanium oxide (PHOTOCATALYST APATITE, manufactured by Taihei Chemical Industrial Co., Ltd., particle size: 5 µm) in place of the porous silica-coated titanium oxide. The resulting fiber structure had a basis weight of 5 g/m² and an average fiber diameter of 0.15 µm, and a fiber having a fiber length of not more than 20 µm was not observed. A catalyst particle size was 9 µm. A scanning electron microscope photograph of the fiber structure is shown in Fig. 17. The results of catalytic activity evaluation of the resulting catalyst-supporting fiber structure are shown in Table 1.

### Example 10

The same operations as in Example 6 were followed, except for using, as the catalyst, titanium oxide (PC-101A, manufactured by Titan Kogyo Kabushiki Kaisha, particle size: 40 nm) in place of the porous silica-coated titanium oxide.

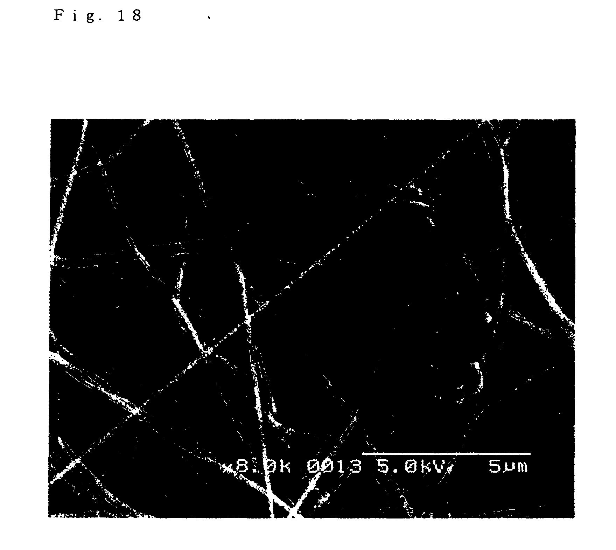

The resulting fiber structure had a basis weight of 5 g/m² and an average fiber diameter of 0.15 µm, and a fiber having a fiber length of not more than 20 µm was not observed. A catalyst particle size was 4 µm. A scanning electron microscope photograph of the fiber structure is shown in Fig. 18. The results of catalytic activity evaluation of the resulting catalyst-supporting fiber structure are shown in Table 1.

### Example 11

A solution consisting of 1 part by weight of poly(vinyl chloride) (manufactured by Wako Pure Chemical Industries, Ltd.), 4.5 parts by weight of N, N-dimethylformamide (a special grade, manufactured by Wako Pure Chemical Industries, Ltd.), 4.5 parts by weight of tetrahydrofuran (a special grade, manufactured by Wako Pure Chemical Industries, Ltd.), and 0.5 parts by weight of porous silica-coated titanium oxide (MUSKMELON TYPE PHOTOCATALYST, manufactured by Taihei Chemical Industrial Co., Ltd., particle size: 2 µm) was prepared. Subsequently, by using a device as shown in Fig. 1, the subject solution was discharged into a fibrous substance collecting electrode (5 in Fig. 1) for 30 minutes. An inner diameter of an injection nozzle (1 in Fig. 1) was 0.8 mm, a solution feed rate was 20 µL/min, a voltage was 12 kV, and a distance from the injection nozzle (1 in Fig. 1) to the fibrous substance collecting electrode (5 in Fig. 1) was 15 cm. The resulting fiber structure had a basis weight of 7 g/m². The surface of the resulting fiber structure was observed by a scanning electron microscope and found to have an average fiber diameter of 0.2 µm. A fiber having a fiber length of not more than 20 µm was not observed. A catalyst particle size was 11 µm.

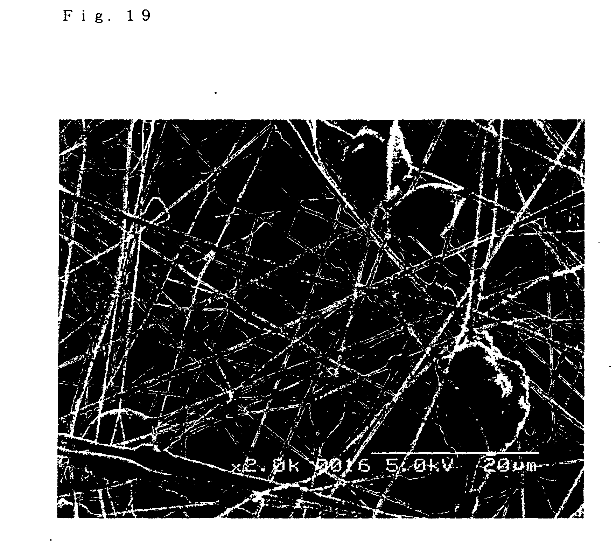

A scanning electron microscope photograph of the fiber structure is shown in Fig. 19. The results of catalytic activity evaluation of the resulting catalyst-supporting fiber structure are shown in Table 1.

### Example 12

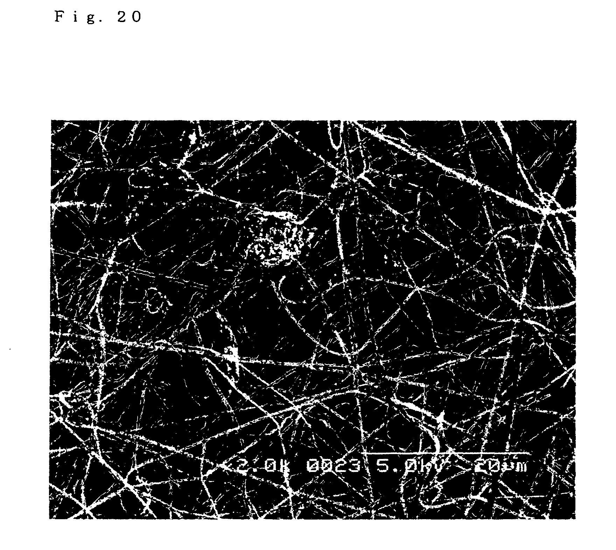

The same operations as in Example 11 were followed, except for using, as the catalyst, apatite-coated titanium oxide (PHOTOCATALYST APATITE, manufactured by Taihei Chemical Industrial Co., Ltd., particle size: 5 µm) in place of the porous silica-coated titanium oxide. The resulting fiber structure had a basis weight of 7 g/m² and an average fiber diameter of 0.2 µm, and a fiber having a fiber length of not more than 20 µm was not observed. A catalyst particle size was 10 µm. A scanning electron microscope photograph of the fiber structure is shown in Fig. 20. The results of catalytic activity evaluation of the resulting catalyst-supporting fiber structure are shown in Table 1.

### Example 13

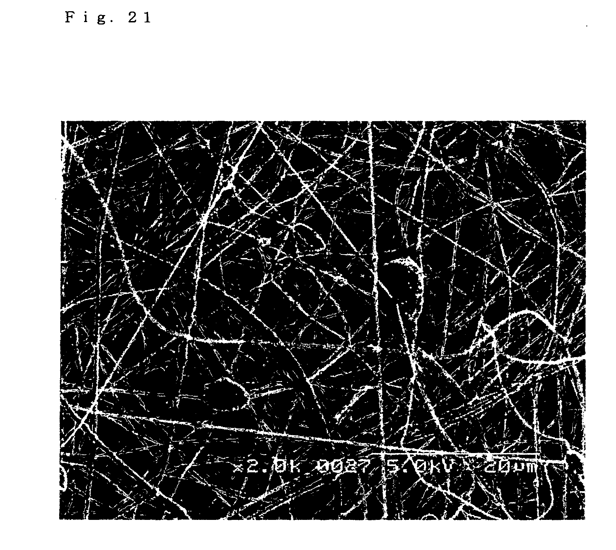

The same operations as in Example 11 were followed, except for using, as the catalyst, titanium oxide (PC-101A, manufactured by Titan Kogyo Kabushiki Kaisha, particle size: 40 nm) in place of the porous silica-coated titanium oxide. The resulting fiber structure had a basis weight of 7 g/m² and an average fiber diameter of 0.2 µm, and a fiber having a fiber length of not more than 20 µm was not observed. A catalyst particle size was 9 µm. A scanning electron microscope photograph of the fiber structure is shown in Fig. 21. The results of catalytic activity evaluation of the resulting catalyst-supporting fiber structure are shown in Table 1.

### Comparative Example 4

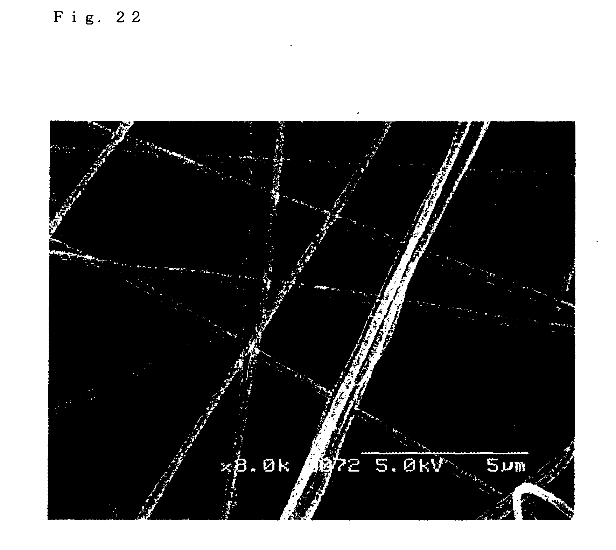

The same operations as in Example 6 were followed, except that the porous silica-coated titanium oxide was not used. The resulting fiber structure had a basis weight of 5 g/m² and an average fiber diameter of 0.15 µm, and a fiber having a fiber length of not more than 20 µm was not observed. A scanning electron microscope photograph of the fiber structure is shown in Fig. 22. The results of catalytic activity evaluation of the resulting catalyst-supporting fiber structure are shown in Table 1.

### Comparative Example 5

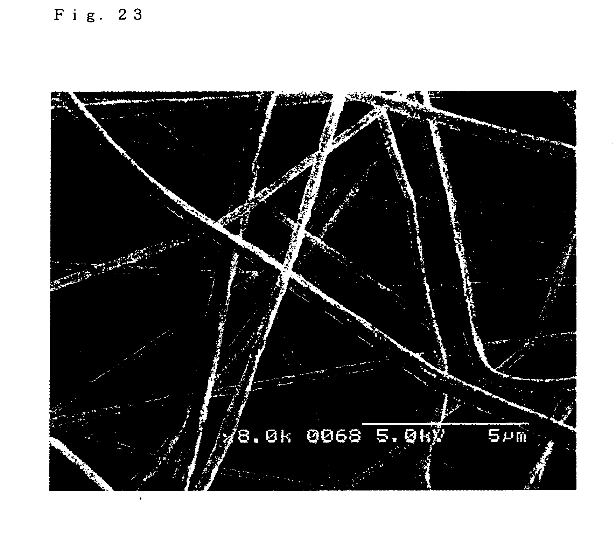

The same operations as in Example 11 were followed, except that the porous silica-coated titanium oxide was not used. The resulting fiber structure had a basis weight of 7 g/m² and an average fiber diameter of 0.2 µm, and a fiber having a fiber length of not more than 20 µm was not observed. A scanning electron microscope photograph of the fiber structure is shown in Fig. 23. The results of catalytic activity evaluation of the resulting catalyst-supporting fiber structure are shown in Table 1.

**Table 1**

| | UV irradiation time (min) | Absorbance at 665 nm |
|---|---|---|
| Example 1 | 30 | 0.07 |
| Example 2 | 30 | 0.06 |
| Example 3 | 30 | 0.08 |
| Example 4 | 30 | 0.42 |
| Example 5 | 60 | 0.37 |
| Example 6 | 60 | 0.19 |
| Example 7 | 60 | 0.20 |
| Example 8 | 60 | 0.47 |
| Example 9 | 60 | 0.27 |
| Example 10 | 60 | 0.83 |
| Example 11 | 60 | 0.13 |
| Example 12 | 60 | 0.38 |
| Example 13 | 60 | 0.93 |
| 10 ppm Methylene Blue aqueous solution | Not irradiated | 1.80 |
| Blank | 30 | 1.06 |
| Blank | 60 | 1.16 |
| Catalyst-non-supporting fiber structure | 60 | 1.25 |
| Comparative Example 1 | 30 | 0.33 |
| Comparative Example 2 | 60 | 0.58 |
| Comparative Example 3 | 60 | 1.38 |
| Comparative Example 4 | 60 | 1.39 |
| Comparative Example 5 | 60 | 1.40 |

## Claims

1. A catalyst-supporting fiber structure having a catalyst supported on a fiber constituting a fiber structure, which is **characterized in that** the fiber has an average fiber diameter of not more than 1 µm and that a fiber having a fiber length of not more than 20 µm is not substantially contained.

2. The catalyst-supporting fiber structure according to claim 1, wherein the catalyst is made of an inorganic compound.

3. The catalyst-supporting fiber structure according to claim 1, wherein the catalyst is a photocatalyst.

4. The catalyst-supporting fiber structure according to claim 3, wherein the photocatalyst is one in which at least a part of the surface thereof is covered by other inorganic compound.

5. The catalyst-supporting fiber structure according to claim 1, wherein the catalyst is supported in a state that the catalyst adheres on the surface of the fiber.

6. The catalyst-supporting fiber structure according to claim 1, wherein the catalyst is supported in a state that the catalyst is contained inside the fiber, a part of which is contained such that it is exposed on the surface of the fiber.

7. The catalyst-supporting fiber structure according to claim 1, wherein the catalyst is supported in a state that the catalyst is a particle having a particle size in the range of from 1 to 100 µm, the particle is included in the fiber structure, and a non-contact portion between the catalyst particle and the fiber is present on the surface of the included catalyst particle.

8. The catalyst-supporting fiber structure according to claim 7, wherein the inclusion is effected by the matter that the catalyst particle comes into contact with one or plural fibers on the surface thereof.

9. The catalyst-supporting fiber structure according to claim 7, wherein the catalyst has a primary particle size of from 1 to 100 µm.

10. The catalyst-supporting fiber structure according to claim 1, wherein the fiber is made of an organic polymer.

11. The catalyst-supporting fiber structure according to claim 10, wherein the fiber is made of polyacrylonitrile or a compound resulting from a thermal treatment of polyacrylonitrile.

12. The catalyst-supporting fiber structure according to claim 10, wherein the fiber is made of a halogen atom-containing organic polymer.

13. The catalyst-supporting fiber structure according to claim 12, wherein the halogen atom-containing organic polymer is poly(vinyl chloride).

14. The catalyst-supporting fiber structure according to claim 10, wherein the fiber is made of poly(lactic acid).

15. A production process of a catalyst-supporting fiber structure, which includes a step for dissolving a fiber-forming organic polymer to produce a solution; a step for spinning the solution by the electrospinning method; a step for obtaining a fiber structure as accumulated on a collecting substrate by the spinning; and a step for supporting a catalyst on the fiber structure.

16. The production process according to claim 15, wherein a solvent to be used for the dissolution is a volatile organic solvent.

17. The production process according to claim 15, wherein the supporting of a catalyst is carried out by dipping the fiber structure in a catalyst-containing liquid.

18. The production process according to claim 15, wherein the supporting of a catalyst is carried out by coating a catalyst-containing liquid on the surface of the fiber structure.

19. A production process of a catalyst-supporting fiber structure, which includes a step for dissolving a fiber-forming organic polymer and a catalyst precursor in a solvent to produce a solution; a step for spinning the solution by the electrospinning method; a step for obtaining a fiber structure as accumulated on a collecting substrate by the spinning; and a step for treating the catalyst precursor contained in the fiber structure to form a catalyst.

20. The production process according to claim 19, wherein the solvent to be used for the dissolution is a volatile organic solvent.

21. The production process according to claim 19, wherein the method for treating the catalyst precursor is a hydrothermal treatment.

22. A production process of a catalyst-supporting fiber structure, which includes a step for dissolving a fiber-forming compound in a solvent and further dispersing a catalyst particle in the solution to produce a dispersion solution; a step for spinning the dispersion solution by the electrospinning method; and a step for obtaining a catalyst-supporting fiber structure as accumulated on a collecting substrate by the spinning.

23. The fiber structure according to claim 22, wherein the catalyst particle is a particle having a particle size in the range of from 1 to 100 µm.

24. The catalyst-supporting fiber structure according to claim 23, wherein the catalyst has a primary particle size of from 1 to 100 µm.

25. The production process according to claim 22, wherein the solvent to be used for the dissolution is a volatile organic solvent.
